# EUROPEAN PATENT APPLICATION

(11) **EP 4 576 851 A1**
(43) Date of publication of application: **25.06.2025**
(21) Application number: 24222884.9
(22) Date of filing: 23.12.2024
(51) Int. Cl.: H04W 8/26, H04W 36/12, H04W 28/08, H04W 36/00, H04W 60/00

(54) **METHOD FOR TARGETED AMF OFFLOAD**

(30) Priority: 22.12.2023 IN 202321088120; 19.12.2024 US 202418986995
(71) Applicant: Mavenir Systems, Inc., Richardson, TX 75081 (US)
(72) Inventor: MURTHY, Veena, Allen, 75002 (US); JINDAL, Tamanna, McKinney, 75070 (US); V K, Venugopal, 560068 Bangalore (IN)
(74) Representative: dompatent von Kreisler Selting Werner - Partnerschaft von Patent- und Rechtsanwälten mbB

(57) **Abstract**

A control system that provides for network-triggered relocation of a subset of active subscribers from one AMF to another AMF allowing for triggering a targeted AMF offload for a subset of active subscribers. The control system provides for indication of a target AMF to which a selected subscriber(s) shall be offloaded to by the source AMF utilizing a 5G-GUTI assigned to UE.

## Description

### BACKGROUND

### 1. Field of the Disclosure

The present disclosure is related to 5G networks. More particularly, the present disclosure is related to a 5G system that facilitates operators having the flexibility to select and move User Equipment (UE) from one Access and Mobility Management Function (AMF) to another AMF.

### 2. Description of Related Art

In an operational 5G network, operators want to have the ability to actively move a registered User Equipment (UE), or a subset of registered UEs from one Access and Mobility Management Function (AMF) to another AMF of their choosing for network testing, load balancing or other operational purposes. The AMF is a control plane function in the 5G core network that handles connection and management mobility tasks. Assuming the responsibility for mobility management, the AMF manages handovers between gNodeB's (gNB's), within the Next Generation Radio Access Network (NG-RAN). Previously referred to as an X2 handover, in 5G New Radio (NR) it is termed an Xn handover. The AMF handles critical control plane functions like registration management, connection management, reachability management, mobility management and access authentication.

Although 5G 3GPP Standards provide a way to take an AMF out of service for planned maintenance activities, the 3GPP defined procedure impacts all subscribers registered with a particular AMF, and it results in all the subscribers of this AMF getting relocated to other AMFs in the same AMF set. There is no 3GPP defined mechanism to apply the desired relocation logic to select specific subscribers, and then to direct those selected subscribers to a specific target AMF. Thereby operators presently do not have the operational flexibility to selectively move specific active subscribers from one AMF to another.

Accordingly, there is a need for a control system that overcomes, alleviates, and/or mitigates one or more of the aforementioned and other deleterious effects of prior art systems.

### SUMMARY

Accordingly, it would be advantageous to provide a control system that provides for network-triggered relocation of a subset of active subscribers from one AMF to another AMF.

It is further desired to provide a control system and method that allows for triggering a targeted AMF offload for a subset of active subscribers. These could include for example, specific Subscription Permanent Identifiers (SUPI), Subscription Permanent Identifiers / Generic Public Subscription Identifiers (SUPI / GPSI) range, all User Equipment (UE) of a partner Public Land Mobile Network (PLMN), all UE in a specific location, percentage of total subscribers, etc.

It is also desired to provide a control system and method to indicate a target AMF to which a selected subscriber(s) shall be offloaded to by the source AMF.

To achieve these objectives, as system is provided that utilizes the 5G-Globally Unique Temporary Identifier (5G-GUTI) assigned to UE. 3GPP standards define 5G-GUTI as a temporary identifier for UEs allocated by the serving AMF. The 5G-GUTI is used in 5G to keep the subscriber's International Mobile Subscriber Identity (IMSI) confidential. At the time of network registration, the AMF will allocate the 5G-GUTI, which is comprised of the GUAMI (Globally Unique AMF ID) and the 5G-TMSI (5G Temporary Mobile Subscriber Identity). Accordingly, the 5G-GUTI includes an identifier of the AMF that has allocated the temporary identifier to the UE, and thereby is the entity primarily providing service to the UE. RAN uses this identifier to route UE messages to the correct AMF as follows:
<SG-STMSI> := <AMF Pointer><5G-TMSI>
<5G-GUTI> := <MCC> <MNC> <AMF Region ID> <AMF Set ID> <5G-STMSI>
where, the AMF Pointer identifies an AMF, within the AMF Set, that the 5G-GUTI is allocated by.

In one configuration, a control system is provided that provides for network triggered relocation of a subset of active subscribers from one AMF to another. In another configuration, the control system provides for triggering targeted AMF offload for a subset of active subscribers, such as specific SUPI(s), SUPI/GPSI range, all UEs of a partner PLMN, all UEs in a specific location, percentage of total subscribers, etc. In particular, the control system allows for indicating the target AMF to which the selected subscriber(s) shall be offloaded to by the source AMF. There are several control system configurations that can achieve the above-listed results including the following configurations:
1) The source AMF requesting the target AMF to provide a new 5G-GUTI for the UE for idle mode targeted AMF Offload.
2) The target AMF may assign a 5G-GUTI to the UE that is not yet registered to targeted AMF, which facilitates triggering of targeted AMF Offload from source to the target AMF.
3) The source AMF may provide the target 5G-GUTI to the UE and trigger its idle mode targeted AMF offload.
4) The source AMF may request the target AMF provide the 5G-GUTI for targeted AMF offload and relocation of multiple UEs in a single request.
5) The target AMF may provide the source AMF multiple 5G-GUTIs for targeted AMF offload and relocation of multiple UEs in a single request.
6) The target AMF may handle incoming UE procedure post allocation of target AMF 5G-GUTI for targeted AMF offload during idle mode relocation of the UE.
7) The target AMF may provide service continuity to UE following targeted AMF offload and relocation to target AMF in both idle and connected mode targeted offload of the UE.
8) The source AMF may directly trigger targeted offload to target AMF via UE context transfer to targeted AMF Offload.
9) The target AMF may handle targeted offload from source AMF for a UE, for connected mode transition of UE from source to Target AMF.
10) The target AMF may update the RAN with a new transport network layer address (TNLA) identifier for UE as part of the targeted offload to target AMF.
11) The target AMF may update UE with a new 5G-GUTI assigned by the target AMF.

For this application the following terms and definitions shall apply:

The term "data" as used herein means any indicia, signals, marks, symbols, domains, symbol sets, representations, and any other physical form or forms representing information, whether permanent or temporary, whether visible, audible, acoustic, electric, magnetic, electromagnetic or otherwise manifested. The term "data" as used to represent predetermined information in one physical form shall be deemed to encompass any and all representations of the same predetermined information in a different physical form or forms.

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The term "automatic" and variations thereof, as used herein, refers to any process or operation done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

In one configuration a method in a 5G network for network-triggered relocation of a User Equipment (UE) connected to a first Access and Mobility Management Function (AMF) via a next generation NodeB (gNB) to a second AMF is provided, comprising the steps of: a source AMF assigning a target 5G-Globally Unique Temporary Identifier (5G-GUTI) to a UE that registers with the source AMF, and the target 5G-GUTI including a source Globally Unique AMF ID (GUAMI) and the 5G-Temporary Mobile Subscriber Identity (5G-TMSI). The method further comprises the steps of: the source AMF requesting a target AMF provide a target 5G-GUTI for the UE for idle mode targeted AMF offload, the target 5G-GUTI including a target GUAMI and the 5G-TMSI, or the target AMF assigning the target 5G-GUTI to the UE that is not yet registered to target AMF, which facilitates triggering of targeted AMF offload from the source AMF to the target AMF.

In the method described above, when the source AMF requests the target AMF provide the target 5G-GUTI for the UE, the method comprises the following steps: the target AMF provides the source AMF with the target 5G-GUTI for the UE to be offloaded to the target AMF, and the source AMF allocates the target 5G-GUTI to the gNB and to the UE. The method further comprises the step of: the source AMF updates the UE context data with Unstructured Data Storage Function (UDSF), which includes the new 5G-GUTI, and the source AMF releases signaling connection to facilitate the movement of the UE to the target AMF during a next UE signaling event. The method still further comprises the steps of: during the next UE signaling event, the UE initiates a service request / registration request directed towards 5GC and provides the gNB with the network allocated 5G-S-Temporary Mobile Subscriber Identifier (5G-STMSI), which the gNB uses to direct a UE signaling message towards the target AMF, and on receiving the UE signaling message, the target AMF confirms that the 5G-STMSI is allocated by itself, retrieves the latest UE context data from UDSF and proceeds to handle the UE procedure for service continuity.

Additionally, in the method described above, when the target AMF assigns the target 5G-GUTI to the UE that is not yet registered to target AMF, the method comprises the following steps: the UE connected to the source AMF is identified to be offloaded to the target AMF, and the source AMF transmits a UE transfer request to the target AMF triggering AMF offload and transmission of the UE context information to the target AMF. The method further comprises the step of: the target AMF updates the gNB with a new transport network layer address (TNLA) identifier for the UE to be used for transport of UpLink (UL) UE signaling from the gNB to 5G core equipment, and the target AMF performs a UE configuration update and provides a the target 5G-GUTI to UE and a new TNLA binding to the gNB for UL UE signaling is provided. The method still further comprises the step of: the target AMF updates the UE context data in Unstructured Data Storage Function (UDSF), the target AMF indicates to the source AMF that the AMF offload is complete, and on receiving the UE signaling with the target AMF assigned 5G-GUTI, the UE sends UL messaging using the target AMF assigned 5G-GUTI. Finally, the method comprises the steps of: the gNB performs AMF selection and forwards the UE message to the target AMF, and the target AMF proceeds to handle the UE procedure for service and session continuity to the UE.

The above-described and other features and advantages of the present disclosure will be appreciated and understood by those skilled in the art from the following detailed description, drawings, and appended claims.

### DESCRIPTION OF THE DRAWINGS

FIG. 1 is a block diagram illustrating a 5G system including multiple UE and multiple AMF according to one configuration of the present invention;
FIG. 2 is a block diagram according to the 5G system configuration of FIG. 1, illustrating a first control scheme;
FIG. 3 is a block diagram according to the 5G system configuration of FIG. 1, illustrating a second control scheme;
FIG. 4 is a call flow diagram according to the first control scheme of FIG. 2; and
FIG. 5 is a call flow diagram according to the second control scheme of FIG. 3.

### DETAILED DESCRIPTION

Referring now to the drawings, wherein like reference numerals designate corresponding structure throughout the views.

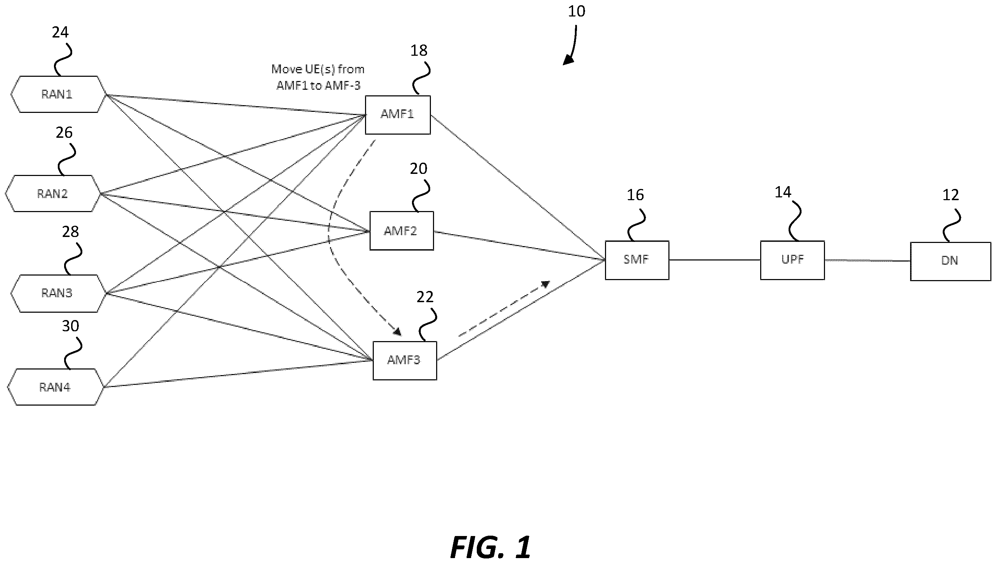

Referring to FIG. 1, a telecom system 10 is provided that includes Data Network (DN) 12 connected to User Plane Function (UPF) 14. DN 12 may be connected to UPF 14 via a GTPv1 connection. GTPV1 means the General Packet Radio Services (GPRS) Tunneling Protocol version 1 group of IP-based communications protocols used to carry GPRS within Global System for Mobile communication (GSM) and Universal Mobile Telecommunications Systems (UMTS) networks.

The UPF 14 is connected to the 5G Session Management Function (SMF) 16, which may be via an N4 connection. SMF 16 is responsible for interacting with the decoupled data plane, creating, updating and removing Protocol Data Unit (PDU) sessions and managing session context with the UPF 14.

SMF 16 is connected to Access and Mobility Management Function (AMF) AMF1 18, AMF2 20, AMF3 22, which may be via an N11 connection. It should be noted that the AMF are one of the control plane network functions (NF) of a 5G core network (5GC). SMF 16 produces records of activity on a mainframe computer that are recorded to a file. Types of activities that may be recorded by SMF 16 include errors, software usage, network activity, and much more.

AMF 18, 20, 22 are variously connected to Radio Access Networks (RAN) RAN1 24, RAN2 26, RAN3 28 and RAN4 30. The RAN may use N2 (control plane) and N3 (user plane) to interface to the core and transparent N1 interface to the user devices (not shown). N1 is a transparent interface from 5G-UE to AMF of core (via NG-RAN). The N1 interface is used by UE for transmitting non radio signaling between UE and AMF, which includes information related to connection, mobility and session related messages to AMF which handles cases related to connection, mobility messages, but forwards session management info to the SMF. The N2 interface supports control plane signaling between the RAN and 5G core covering scenarios related to UE context management, PDU session/resource management procedures. N2 uses SCTP (NGAP) between SGCN and access network.

In the example shown in FIG. 1, various UE, which are connected to RAN1 24, RAN2 26, RAN3 28 and RAN4 30 are connected to AMF1 18. It may be desirable to move the UE that is connected to AMF1 18 (the source AMF) to AMF3 22 (the target AMF). This is illustrated by the arrows in FIG. 1.

It should be noted that for operational purposes, service operators can trigger AMF offload for relocation of select UE to a target AMF as indicated by the arrows, and the ongoing UE service will not be impacted upon targeted AMF offload.

Two solutions are outlined for performing AMF offload to move one or more subscribers / UE from the source AMF to the target AMF, based on operator preference. Either approach can be used to trigger targeted AMF offload for: a single subscriber, all subscribers in a specific location, all subscribers of a specific PLMN, a percentage of all subscribers registered in source AMF, or operator specific offload criteria.

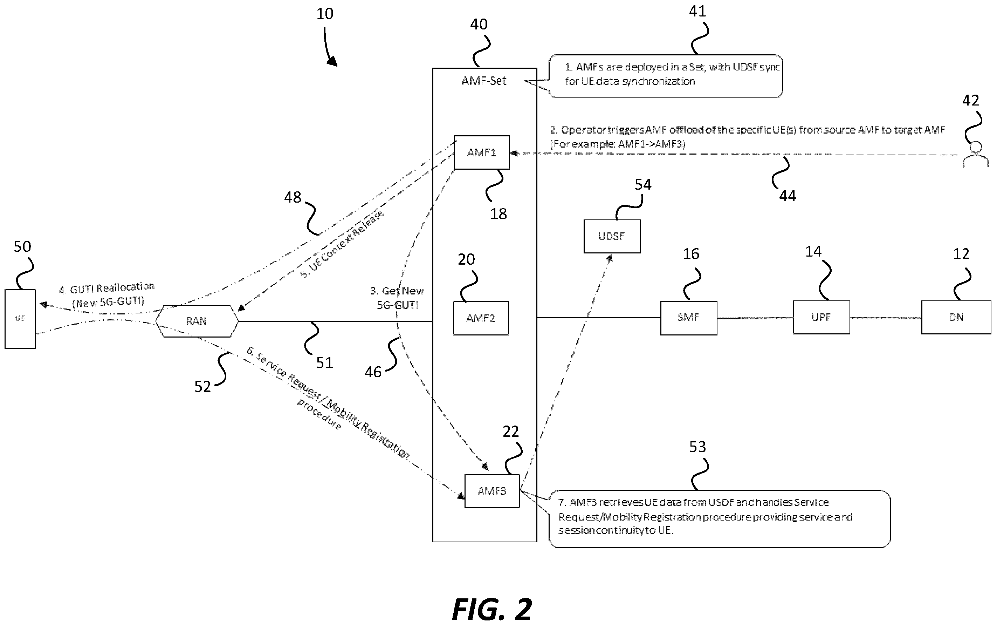

**Solution** 1. Referring now to FIG. 2, AMF1 18, AMF2 20, AMF3 22 are depicted as an AMF-Set 40. In this configuration, AMF1 18, AMF2 20, AMF3 22 are deployed in a set, with Unstructured Data Storage Function (UDSF) sync for UE data synchronization.

In this situation, an operator 42 triggers an AMF offload 44 of specific UE from a source AMF (e.g., AMF1 18) to a target AMF (e.g., AMF3 22). At this point, AMF1 18 then triggers AMF3 22 to provide a new 5G-GUTI 46. AMF1 18 provides the new 5G-GUTI to UE 50 via the gNB (i.e., RAN) that connects the UE to the AMF.

UE 50 may initiate 52 either a Service Request procedure (i.e., due to uplink data), or a mobility registration procedure following the UE context release done in step 208 (see below). AMF3 22 will then retrieve the UE data from Unstructured Data Storage Function (UDSF) 54 and handles the service request and mobility registration procedure providing service and session continuity to the UE 50.

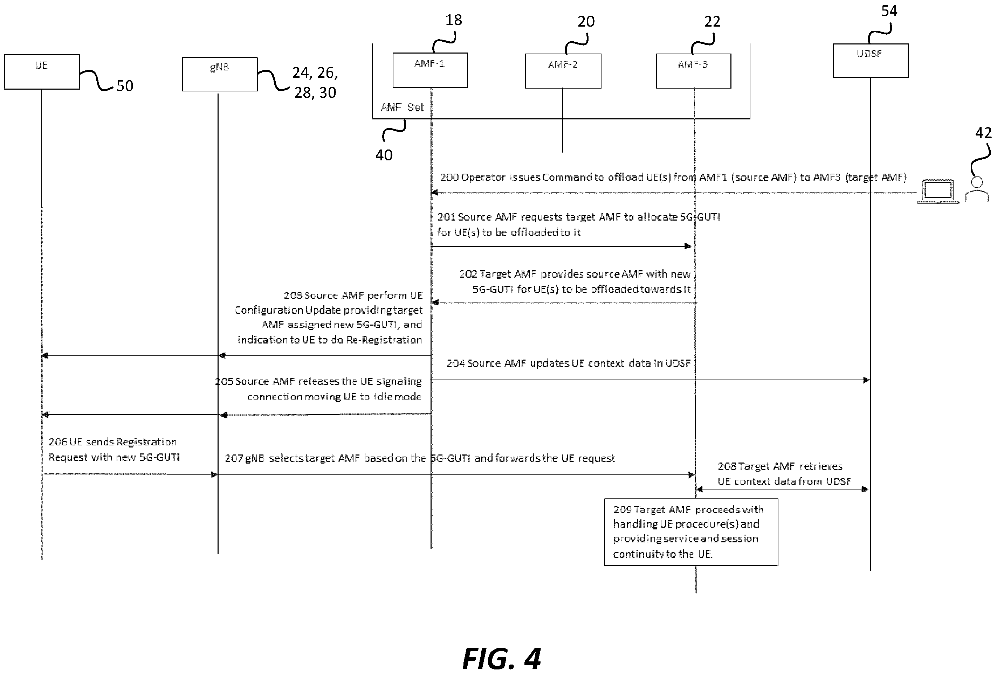

Turning now to FIG. 4, a call flow diagram for FIG. 2 is provided.

At step 200, operator 42 triggers offload of one or more subscribers from one AMF (source AMF1 18) to another AMF (target AMF3 22) by specifying the subscriber(s) that shall be offloaded, and the target AMF to which the subscriber(s) shall be offloaded to.

At step 201, the source AMF1 18 triggers a message to the target AMF3 22 to allocate a 5G-GUTI from its managed GUTIs to the subscribers to be offloaded and relocated to it.

At step 202, the target AMF3 22 provides the source AMF1 18 with a new 5G-GUTI for UE to be offloaded to the target AMF3 22.

At step 203, the source AMF1 18 allocates the target AMF3 22 allocated 5G-GUTI to the next generation NodeB (gNB) (RAN 24, 26, 28, 30) and to the targeted offload subscriber(s) (UE 50).

At step 204, the source AMF1 18 updates the UE 50 context data with UDSF 54, which includes the new 5G-GUTI. This allows the latest UE 50 data to be accessible for all AMFs in the AMF-Set 40.

At step 205, The source AMF1 18 releases the signaling connection to facilitate the movement to the target AMF3 22 during the next UE 50 signaling.

At step 206, during the next UE 50 signaling event, UE 50 initiates a service request / registration request directed towards SGC and provides the RAN with the network allocated 5G-S-Temporary Mobile Subscriber Identifier (SG-STMSI), which the RAN uses to direct the UE 50 message towards the target AMF3 22 at step 207.

At step 208, on receiving the UE 50 signaling message, the target AMF3 22 confirms that the SG-STMSI is allocated by itself, retrieves the latest UE 50 context data from UDSF 54 and proceeds to handle the UE 50 procedure for service continuity at step 209.

It should be noted that when a subset of subscribers is to be offloaded and relocated, it may be desirable for the solution to be optimized to minimize the messaging between the source AMF1 18 and target AMF3 22 to facilitate allocation of 5G-GUTI for multiple subscribers in a single request / response.

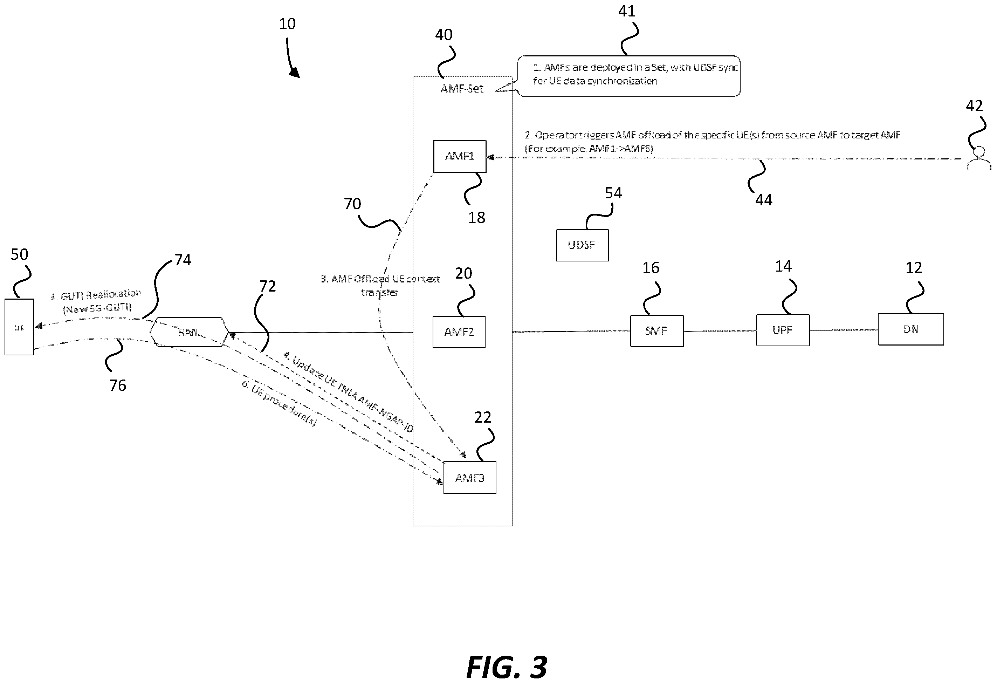

**Solution** 2. Referring now to FIG. 3, the configuration is similar with that described in connection with FIG. 2. AMF1 18, AMF2 20, AMF3 22 are depicted as an AMF-Set 40. In this configuration, AMF1 18, AMF2 20, AMF3 22 are deployed in a set, with Unstructured Data Storage Function (UDSF) sync for UE data synchronization.

In this situation, an operator 42 triggers an AMF offload 44 of specific UE from a source AMF (e.g., AMF1 18) to a target AMF (e.g., AMF3 22). At this point, AMF1 18 then notifies 70 AMF3 22 of the AMF offload UE 50 context transfer.

Target AMF3 22 updates the UE 50 TNLA AMF-NGAP-ID 72. Target AMF3 22 also provides to UE 50 the new 5G-GUTI reallocation 74.

UE 50 can then send messaging using the target AMF3 22 with the assigned new 5G-GUTI 76.

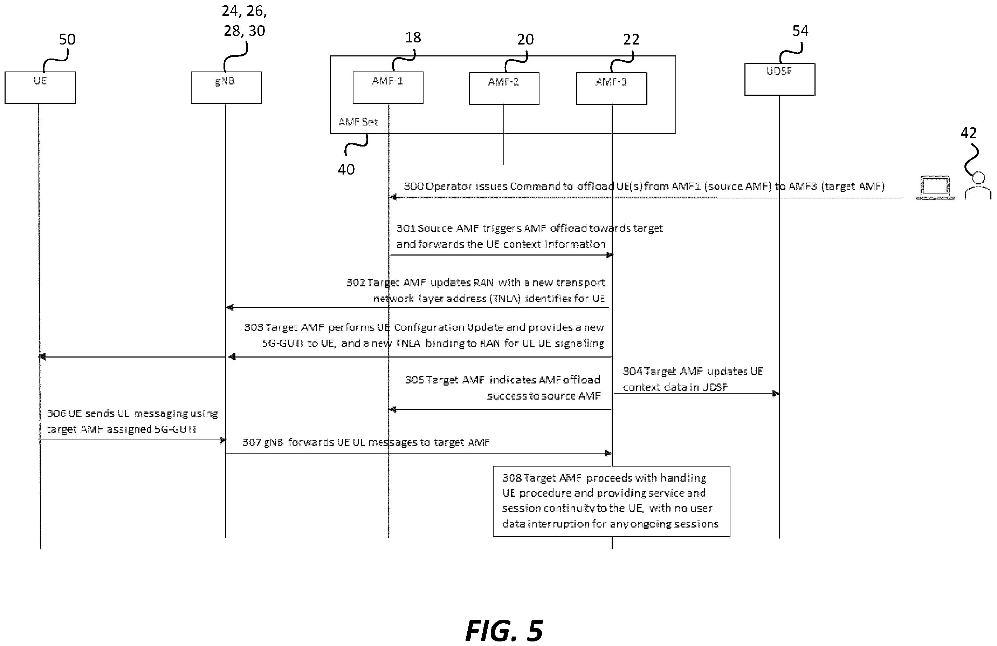

Turning now to FIG. 5, a call flow diagram for FIG. 3 is provided.

At step 300, operator 42 triggers targeted AMF offload from one AMF (source AMF1 22) to another AMF (target AMF3 22), by specifying the subscriber(s) that shall be subjected to targeted offloaded, and the target AMF3 22 to which the subscriber(s) shall be offloaded to by the source AMF1 22.

At step 301, the source AMF1 22 sends a UE transfer request to the target AMF3 22 triggering AMF offload and transmission of the UE 50 context information.

At step 302, the target AMF3 22 updates RAN with a new transport network layer address (TNLA) identifier for UE 50 to be used for transport of UL UE signaling from the RAN to the 5G core.

At step 303, the target AMF3 22 performs UE 50 configuration update and provides a new 5G-GUTI to UE 50. Additionally, a new TNLA binding to RAN for UL UE signaling is provided.

At step 304, the target AMF3 22 updates UE 50 context data in UDSF 54.

At step 305, the target AMF3 22 indicates to the source AMF1 18 that the AMF offload is complete.

At step 306, on receiving the UE 50 signaling with the target AMF3 22 assigned 5G-GUTI, UE 50 sends UL messaging using the target AMF3 22 assigned 5G-GUTI.

At step 307, the RAN performs AMF selection and forwards the UE message to the target AMF3 22.

At step 308, the target AMF3 22 proceeds to handle the UE 50 procedure for service and session continuity to the UE 50.

When a targeted offload is initiated for a subset of subscribers by the operator, steps 301-308 are repeated for each subscriber to be offloaded from the source AMF to the target AMF.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

## Claims

1. A method in a 5G network for network-triggered relocation of a User Equipment (UE) connected to a first Access and Mobility Management Function (AMF) via a next generation NodeB (gNB) to a second AMF comprising the steps of:
a source AMF assigning a target SG-Globally Unique Temporary Identifier (5G-GUTI) to a UE that registers with the source AMF, wherein the target 5G-GUTI includes a source Globally Unique AMF ID (GUAMI) and the 5G-Temporary Mobile Subscriber Identity (5G-TMSI);
the source AMF requesting a target AMF provide a target 5G-GUTI for the UE for idle mode targeted AMF offload, the target 5G-GUTI including a target GUAMI and the 5G-TMSI, or
the target AMF assigning the target 5G-GUTI to the UE that is not yet registered to target AMF, which facilitates triggering of targeted AMF offload from the source AMF to the target AMF.

2. The method according to claim 1, wherein when the source AMF requests the target AMF provide the target 5G-GUTI for the UE, the method comprises the following steps:
the target AMF provides the source AMF with the target 5G-GUTI for the UE to be offloaded to the target AMF;
the source AMF allocates the target 5G-GUTI to the gNB and to the UE;
the source AMF updates the UE context data with Unstructured Data Storage Function (UDSF), which includes the new 5G-GUTI;
the source AMF releases signaling connection to facilitate the movement of the UE to the target AMF during a next UE signaling event;
during the next UE signaling event, the UE initiates a service request / registration request directed towards SGC and provides the gNB with the network allocated 5G-S-Temporary Mobile Subscriber Identifier (SG-STMSI), which the gNB uses to direct a UE signaling message towards the target AMF;
on receiving the UE signaling message, the target AMF confirms that the SG-STMSI is allocated by itself, retrieves the latest UE context data from UDSF and proceeds to handle the UE procedure for service continuity.

3. The method according to claim 1, wherein when the target AMF assigns the target 5G-GUTI to the UE that is not yet registered to target AMF, the method comprises the following steps:
the UE connected to the source AMF is identified to be offloaded to the target AMF;
the source AMF transmits a UE transfer request to the target AMF triggering AMF offload and transmission of the UE context information to the target AMF;
the target AMF updates the gNB with a new transport network layer address (TNLA) identifier for the UE to be used for transport of UpLink (UL) UE signaling from the gNB to 5G core equipment;
the target AMF performs a UE configuration update and provides the target 5G-GUTI to UE and a new TNLA binding to the gNB for UL UE signaling is provided;
the target AMF updates the UE context data in Unstructured Data Storage Function (UDSF);
the target AMF indicates to the source AMF that the AMF offload is complete;
on receiving the UE signaling with the target AMF assigned 5G-GUTI, the UE sends UL messaging using the target AMF assigned 5G-GUTI;
the gNB performs AMF selection and forwards the UE message to the target AMF;
the target AMF proceeds to handle the UE procedure for service and session continuity to the UE.

4. The method according to claim 1, wherein the UE comprises a plurality of UE.

5. The method according to claim 4, wherein when the source AMF requests the target AMF provide the target 5G-GUTI for the UE, the target AMF provides target 5G-GUTIs for the plurality of UE such that targeted AMF offload and relocation of the plurality of UE occurs in a single request.

6. The method according to claim 4, wherein when the target AMF assigns the target 5G-GUTI to the UE that is not yet registered to target AMF, the target AMF assigns target 5G-GUTIs for the plurality of UE such that targeted AMF offload and relocation of the plurality of UE occurs in a single request.

7. The method according to claim 4, wherein the plurality of UE comprises a subset of active subscribers selected from the group consisting of: specific Subscription Permanent Identifiers (SUPI), a Subscription Permanent Identifiers / Generic Public Subscription Identifiers (SUPI / GPSI) range, all UE of a partner Public Land Mobile Network (PLMN), all UE in a specific location, a percentage of total subscribers, and combinations thereof.

8. The method according to claim 1, wherein when the target AMF assigns the target 5G-GUTI to the UE that is not yet registered to target AMF, the target AMF handles incoming UE procedure post allocation of target AMF 5G-GUTI for targeted AMF offload during idle mode relocation of the UE.

9. The method according to claim 1, wherein the target AMF provides service continuity to UE following targeted AMF offload and relocation to target AMF in both idle and connected mode targeted offload of the UE.

10. The method according to claim 1, wherein the source AMF directly triggers targeted offload to target AMF via UE context transfer to targeted AMF offload.

11. The method according to claim 1, wherein the target AMF handles targeted offload from the source AMF for the UE, for connected mode transition of the UE from the source AMF to the target AMF.

12. The method according to claim 1, wherein the target AMF updates the RAN with a new transport network layer address (TNLA) identifier for the UE as part of the targeted offload to the target AMF.
